# EUROPEAN PATENT SPECIFICATION

(11) **EP 2 222 453 B1**
(45) Date of publication and mention of the grant of the patent: **16.01.2013**
(21) Application number: 08864237.6
(22) Date of filing: 28.10.2008
(51) Int. Cl.: B29C 70/44, B32B 5/26, B32B 5/28, B32B 27/04, F03D 1/06

(54) **A METHOD OF MANUFACTURING A COMPOSITE PART FROM RESIN-PREIMPREGNATED FIBRES**
VERFAHREN ZUR HERSTELLUNG EINES VERBUNDTEILS AUS MIT HARZ VORIMPRÄGNIERTEN FASERN
PROCÉDÉ DE FABRICATION D'UNE PIÈCE COMPOSITE À PARTIR DE FIBRES PRÉ-IMPRÉGNÉES DE RÉSINE

(30) Priority: 20.12.2007 DK 200701839; 20.12.2007 US 9054 P
(43) Date of publication of application: 01.09.2010
(73) Proprietor: Vestas Wind Systems A/S, 8200 Aarhus N (DK)
(72) Inventor: JENSEN, Jakob, Hjorth, DK-6971 Spjald (DK)
(86) International application number: PCT/DK2008/050265
(87) International publication number: WO 2009/080037

(56) References cited:
- EP-A- 1 808 598
- US-A- 3 666 600
- US-A- 5 593 633
- US-A1- 2006 246 796

## Description

### FIELD OF THE INVENTION

The present invention relates to a method of manufacturing composite parts and in particular to methods in which the composite parts are manufactured from layers of resin-preimpregnated fibres which are subjected to vacuum and heating.

### BACKGROUND OF THE INVENTION

Fibre reinforced resin composites are used in wind turbine manufacturing. Here it is known to manufacture composite parts, in particular rotor blades, from layers of resin-preimpregnated fibres which are subjected to vacuum and heating. Such layers of resin-preimpregnated fibres are also called pre-pregs in the following. The manufacturing methods typically comprise placing the pre-pregs on a moulding surface and placing one or more non-woven fibre mats on top of the upper pre-preg. Such non-woven fibre mats are called a breather or bleeder layer, as they are used to remove both air and excess resin. In the following, the term "breather" will be used. An airtight and flexible enclosure is then placed over the pre-pregs and the breather layer. The enclosure is typically sealed to the moulding surface by sealing tape. Vacuum is applied to evacuate air from the enclosure, and then heat is applied. This will cause a decrease in the viscosity of the preimpregnating resin to cause a flow of resin in a direction substantially perpendicular to the layers of resin-preimpregnated fibres and towards the breather layer. The parts are then left at an elevated temperature to cure for a predetermined period of time.

The vacuum and heat causes resin to flow into the breather layer, and this resin therefore is of no use in the final product. When large parts are manufactured, it is often necessary to use a thick breather layer to be able to establish the vacuum, or at least a sufficiently low pressure, and such a thick breather layer may have a tendency to drain too much resin from the part. It is difficult to control exactly how much resin that flows into the breather layer, and furthermore it is difficult to ensure that no areas experience too large a resin drain. These shortcomings may result in weakened material properties or defects, and careful quality control is therefore necessary. The quality control, which is typically a NDT-scanning, can also be used to reveal the degree of air trapped in the composite part.

Hence, an improved manufacturing method would be advantageous, and in particular a method with which less resin is removed from the pre-pregs would be advantageous.

US 3666600 describes a method for preparing glass fabric laminates which uses a scrim cloth made of glass fibres as a breather layer. US5593633 describes a method of vacuum forming fibre reinforced material using a metal mesh as a breather layer.

### OBJECT OF THE INVENTION

It is an object of the present invention to provide a method of manufacturing a composite part from a number of pre-pregs by which method the amount of waste resin can be lowered compared to presently used methods.

It is a further object of the present invention to provide a method of manufacturing a composite part from a number of pre-pregs by which method the amount of resin in the pre-pregs can be reduced compared to presently used methods without reducing the amount of resin in the finished product.

It is a further object of the present invention to provide a method by which less air is trapped within the composite structure which results in better and more reliable mechanical properties.

It is a further object of the present invention to provide an alternative to the prior art.

### SUMMARY OF THE INVENTION

Thus, the above described object and several other objects are intended to be obtained in a first aspect of the invention by providing
a method of manufacturing a wind turbine blade, formed from a laminated composite part, from layers of resin-preimpregnated fibres, said method comprising the steps of
- placing a number of layers of resin-preimpregnated fibres on a moulding surface
- placing at least one breather layer formed from a polymeric material over at least a part of the layers of resin-preimpregnated fibres, said breather layer having a structure comprising at least one strand or string arranged in a repeated pattern in order to provide a network of interconnected channels, said channels extending in at least two non-parallel directions within the breather layer and having a cross sectional area which is at least corresponding to a thickness of the strand or string, such that the at least one strand or string occupies substantially less space in the breather layer than the channels,
- providing an airtight and flexible enclosure over the layers of resin-preimpregnated fibres and the breather layer,
- substantially evacuating air present in the enclosure, and
- heating the layers of resin-preimpregnated fibres to cause a decrease in viscosity of the preimpregnating resin to cause a flow of resin in a direction substantially perpendicular to the layers of resin-preimpregnated fibres and towards the breather layer for a predefined period of time.

By "strand" is preferably meant a very slender natural or synthetic fibre. A number of strands may be twisted together to form a rope-like structure. By "string" is preferably meant material of elongate extension, typically linearly, which material has not necessarily existed in the form of a separate strand.

The air may typically be evacuated by use of a vacuum pump which may be left on during at least a part of the period of time during which the layers of resin-preimpregnated fibres are heated.

The repeated pattern in which the at least one strand or string is arranged may be obtained by a process comprising knitting or weaving but more complex structures, including combinations of woven and knitted, may also be obtained. It may also be a process resulting in a pattern in which some strands or strings have a substantially linear extension, whereas other strands or strings are curved. The strands or strings may e.g. have a linear extension in one or two direction(s) and be joined e.g. by stitching or gluing. The pattern may preferably be repeated in at least two directions perpendicular to the thickness direction of the breather layer.

In some embodiments the breather layer may be made by a process comprising extrusion. The extrusion may be followed at least a part of the structure of the breather layer being provided by use of at least one roller. It may e.g. be extrusion of a polymer sheet material followed by passing the extruded material between rollers or between a roller and a solid surface when the material is still in a partly melted and non-solidified state. The roller(s) and or the surface comprise protrusions being pressed into the non-solidified polymer to form the holes; these holes constitute the channels of the breather layer. When the polymer solidifies, the network is formed by the strings of polymer being melted together. In this case the breather layer will typically be described as comprising strings of material, since these strings has not existed as a separate unit.

The thickness of the strand or string may be at least 0.1 mm, such as 0.1-2 mm, such as 0.1-1 mm, such as 0.2-0.3 mm. When two or more strands or strings are used in the breather layer, the strands or strings may have the same or different thicknesses.

The breather layer may have a thickness before use which is at least one times the thickness of the strand or string, such as 2-10 times the thickness of the strand or string, such as 3-6 times the thickness of the strand or string. The breather layer may preferably have a structure in which two or more parts of the one ore more strand(s) or string(s) intersect at points having a substantially constant mutual distance. Such points counteract compression of the breather layer during evacuation of air and thereby contribute to ensuring that the channels are kept open during the manufacturing process. The strands or strings may be bonded together at the intersection points, or the strands or strings may be free to move relative to each other.

The breather layer may be made from a polymeric material, such as polyamide, polyester or polypropylene. Other materials, such as e.g. glass fibres or natural fibres, are also possible within the scope of the application. The material must retain the desired mechanical properties during the whole manufacturing process, and since the breather layer is a waste material after use, it must also be ensured that it can be incinerated without undesired environmental impact.

The method may comprise the use of two or more breather layers which may be placed on top of each other. Hereby the total thickness of the breather layers can easily be adapted to a given application. Alternatively or in combination thereto, at least one of the breather layers may be placed under the layers of resin-preimpregnated fibres. This may be used to obtain a better and more uniform evacuation of air and excess resin especially for composite parts having relatively larger thicknesses. The two or more breather layers may be similar or different with respect to material, structure and/or thickness.

In any of the methods mentioned above, an additional layer made from non-woven fibres may be placed on top of or underneath the breather layer(s). Such a layer may have a higher resistance against resin flow and may e.g. be used to prevent resin to reach a flexible sheet used to provide the airtight and flexible enclosure.

The temperature to which the layers of resin-preimpregnated fibres are heated may be at least 80°C, such as 100-130°C, such as 110-120°C. The choice of temperature will depend on the resin used, and it may also vary during the manufacturing process if such variation is found advantageous e.g. for the curing of the resin.

The method of manufacturing a laminated composite part may further comprise the step of applying pressure to the layers of resin-preimpregnated fibres during at least a part of the period of time in which they are heated. Such a pressure may assist in the evacuation of air otherwise trapped within the structure, and it may also be used to obtain a desired compaction of the layers of fibres and thereby a desired volume ratio between the fibres and resin.

### BRIEF DESCRIPTION OF THE FIGURES

The method of manufacturing a composite part according to the invention will now be described in more detail with regard to the accompanying figures. The figures show one way of implementing the present invention and is not to be construed as being limiting to other possible embodiments falling within the scope of the attached claim set.
Figure 1 shows schematically the manufacturing of a composite part from a number of pre-pregs.
Figure 2 shows schematically a top view of an example of a breather layer used in a method according to the present invention.
Figure 3 shows schematically a cross sectional view along line A-A in figure 2. Figure 4 shows schematically a top view of an alternative example of a breather layer used in a method according to the present invention.
Figure 5 shows schematically a top view of another example of a breather layer used in a method according to the present invention.
Figure 6 shows schematically a cross sectional view along line A-A in figure 5.

### DETAILED DESCRIPTION OF AN EMBODIMENT

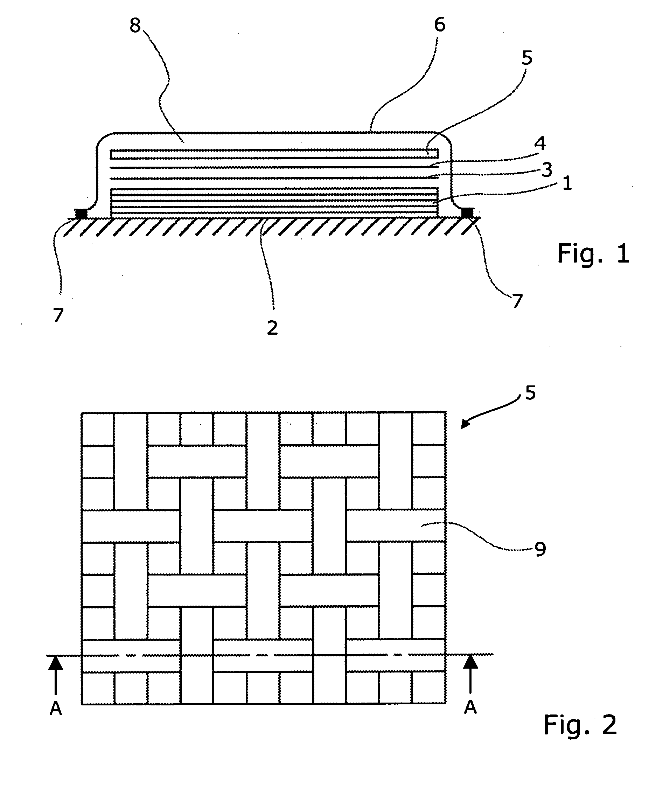

A fibre reinforced resin composite part, which may e.g. be a wind turbine blade, can be manufactured in a number of ways. A well known method comprises the use of layers of resin-preimpregnated fibres (called pre-pregs) which fibres may be arranged in the same direction or in two or more directions. They may also be woven into mats before the impregnation. Figure 1 shows schematically an example of a step in a manufacturing method comprising the use of pre-pregs 1. A predetermined number of pre-pregs 1 which are cut into the desired size and shape are placed on a moulding surface 2 of a mould which surface is typically coated to ease the removal of the composite part after moulding. A peel ply 3 is typically placed on top of the pre-pregs 1 to ensure that the surface of the manufactured composite part stays clean until a possible succeeding processing step, such as painting, or until the part is to be used. The peel ply 3 may furthermore be used to give the composite part a rough finish. On top of the peelply 3 is a separation foil 4, which is typically a porous plastic foil, and a breather layer 5. The separation foil 4 and the breather layer 5 will be dealt with in more details below. All the layers mentioned are covered by an airtight and flexible sheet 6, typically a plastic material, which is sealed to the moulding surface 2 by use of sealing tape 7 to provide an enclosure 8 from which air can be evacuated via a vacuum port (not shown) by use of a vacuum pump (not shown). When substantially all the air present air in the enclosure 8 has been evacuated, heat is applied for a predetermined period of time to cause a decrease in the viscosity of the preimpregnating resin as well as later to cure the resin. Due to the vacuum and the temperature increase, resin will flow in a direction substantially perpendicular to the pre-pregs 1 and towards the breather layer 5. A purpose of the breather layer 5 is to ensure that as much air as possible can be evacuated even if the flexible sheet 6 wrinkles. Some of the resin will flow into the breather layer 5, and another purpose of the breather layer 5 is therefore to take up the excess resin. A purpose of the separation foil 4 is to limit the flow of resin into the breather layer 5. Only one breather layer 5 is shown in figure 1, but it is also possible to place two or more breather layers 5 on top of each other. Such two or more breather layers 5 may be similar or different with respect to material, thickness and/or structure.

For some applications, a pressure is applied in combination with the heat. This is typically done in an autoclave in which the mould and the entire assembly inside the enclosure are placed. The temperature may be varied during the process, and when the curing is complete, the composite part is removed from the mould.

In known manufacturing methods comprising the use of pre-pregs 1, the breather layer 5 is typically made from non-woven fibres of e.g. cotton, and it thereby has a random and felt-like structure. In relation to the present invention, it has been realised that it is advantageous to replace this type of breather layer 5 with a layer having a more open structure typically being made from one or more strands or strings arranged in a repeated pattern in order to provide a network of interconnected channels.

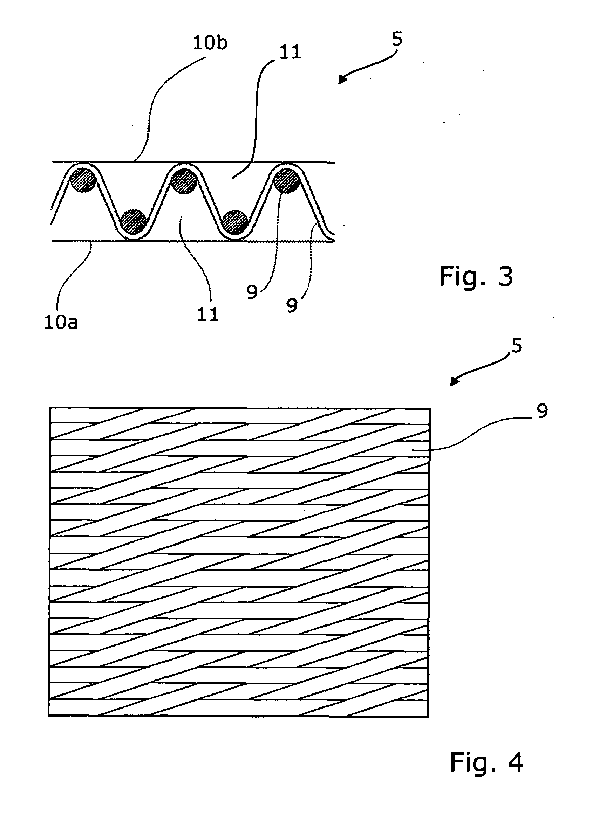

A breather layer 5 according to the present invention also typically has a dominant aperture construction wherein the one or more strands or strings occupy substantially less space than the channels. It may e.g. be made by loose weaving or knitting but more complex structures, including combinations of woven and knitted, may also be obtained. Figure 2 shows schematically a top view of an example of a breather layer 5 according to the present invention. The illustrated breather layer 5 is an open grid fabric made from loose weaving of strands 9. Each strand 9 may e.g. be a single fibre or a bundle of fibres. As mentioned above many other and more complex repeated patterns are possible within the scope of the invention. The strands 9 may e.g. be made from glass fibres or from plastic. Figure 3 shows schematically a cross sectional view along line A-A in figure 2. The figure furthermore shows an upper and a lower boundary line 10 which delimit channels 11 between the strands 9. The boundary lines are not solid physical surfaces, and the lines may therefore be considered imaginary. In the illustrated example, such channels 11 extend in the plane of the paper and perpendicular thereto. When the breather layer 5 is used as shown in figure 1, the lower boundary line 10a represents the separation foil 4, and the upper boundary line 10b represents the flexible sheet 6 used to establish an airtight enclosure 8. However, more than one breather layer 5 may be placed on top on each other, and one or more of the boundary lines 10 then represent(s) an adjacent breather layer 5. When two breather layers 5 have a shared boundary line 10, some of the channels 11 may be formed by strands 9 from both breather layers 5.

As can be understood from the above description, "channel" does typically not mean an elongate cavity having closed sides. The word "channel" is rather used to describe that fluid, such as air or resin, can flow along a path corresponding to what is called a channel. The channels 11 are typically interconnected to form a network of channels 11 so that a fluid flowing inside the breather layer 5 can change the flow direction depending on the local flow resistance due to e.g. friction and fully or partly blocked channels 11. The channels 11 may e.g. be blocked if resin is present therein.

A purpose of the breather layer 5 is to evacuate air from the enclosure 8, and air initially present e.g. between the pre-pregs 1 will typically first flow in a direction substantially perpendicular to the breather layer 5 and then substantially in the plane of the breather layer 5 towards the outlet (not shown) of the enclosure 8 which outlet is connected to the vacuum pump (not shown). The resin typically flows in a corresponding manner, but the precise flow pattern will also be influenced by other factors such as adhesion between resin and the strands 9 of the breather layer 5. The flow of the resin is furthermore influenced by the viscosity of the resin which is again dependent both on the local temperature and the extent to which the resin has started to cure. To obtain an efficient evacuation of air, it must be ensured that the channels are present and of a sufficient size to provide flow paths also when most air has been evacuated and the breather layer 5 is compacted by the vacuum and the influence from the flexible layer 6.

Figure 4 shows schematically a top view of an alternative example of a breather layer in which the strands of fibres are arranged in a pattern different from the one shown in figure 2. An actual choice of structure, material and thickness of the breather layer 5 may therefore have to be made according to the actual situation, e.g.according to type of resin, size of pre-preg etc.

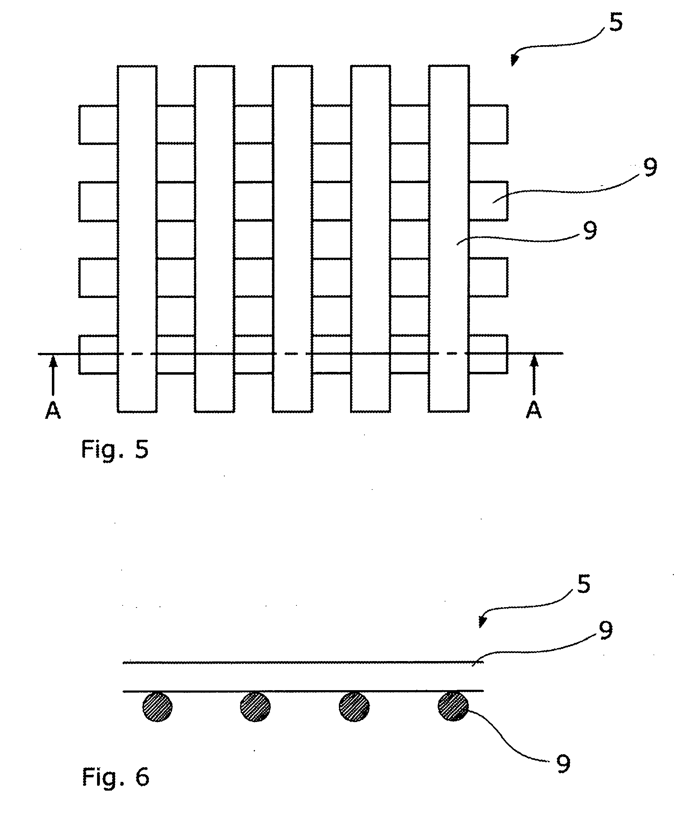

Figure 5 shows schematically a top view of another example of a breather layer 5, and figure 6 shows schematically a cross sectional view along line A-A in figure 5. The breather layer 5 comprises two strands or strings 9 which are not interwoven but joined e.g. by gluing. Alternatively a corresponding pattern can be obtained by a process comprising extrusion of a polymer sheet material followed by passing the extruded material between rollers or between a roller and a solid surface when the material is still in a non-solidified state. The roller(s) and/or the surface comprise protrusions being pressed into the polymer to form the holes; these holes constitute the channels of the breather layer 5. When the polymer solidifies, the network is formed by the strings of polymer being melted together.

An alternative manufacturing process may be to spray strings of melted polymer material onto a surface, e.g. in a pattern as shown in figure 5. In figure 5 and 6 the strings of polymer are illustrated as being arranged with a 0/90° orientation. However, other mutual orientations are also possible within the scope of the present invention.

In the above description, the separation foil 4 and the breather layer 5 are shown as being placed above the layers of pre-pregs 1. It is however also possible within the scope of the invention to place a separation foil 4 and one or more breather layers 5 under the layers of pre-pregs 1. This may typically be done in combination with having such layers 4,5 above the pre-pregs 1, but it is also possible only to have breather layer 5 under the pre-pregs 1.

In relation to the present invention it has been found that a breather layer 5 with an open structure and a repeated pattern results in less resin flowing into the breather layer 5 during manufacturing of the composite part than when a non-woven breather layer 5 is used. This results in less waste resin material which is advantageous with respect to material costs. It furthermore results in more controllable mechanical properties. It may also be possible to lower the amount of resin in the pre-pregs and still obtain reliable products, whereby the material costs can be decreased.

It has furthermore been found that the use of a more open-structured breather layer 5 having a repeated pattern not only results in less resin being transferred into the breather layer 5, but also that that less air is trapped under the separation foil 4 and in the composite structure itself. The reason is at present considered to be that the resistance of the flow of air is significantly less in the breather layer 5 according to the present invention than in a breather layer 5 having a non-woven structure. The better removal of air from the structure during manufacturing contributes to the better and more reliable mechanical properties of the composite parts.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method of manufacturing a wind turbine blade, formed from a laminated composite part, from layers of resin-preimpregnated fibres (1), said method comprising the steps of
- placing a number of layers of resin-preimpregnated fibres (1) on a moulding surface (2)
- placing at least one breather layer (5) formed from a polymeric material over at least a part of the layers of resin-preimpregnated fibres (1), said breather layer having a structure comprising at least one strand or string (9) arranged in a repeated pattern in order to provide a network of interconnected channels (11), said channels extending in at least two non-parallel directions within the breather layer (5) and having a cross sectional area which is at least corresponding to a thickness of the strand or string, such that the at least one strand or string occupies substantially less space in the breather layer than the channels,
- providing an airtight and flexible enclosure (8) over the layers of resin-preimpregnated fibres and the breather layer,
- substantially evacuating air present in the enclosure (8), and
- heating the layers of resin-preimpregnated fibres (1) to cause a decrease in viscosity of the preimpregnating resin to cause a flow of resin in a direction substantially perpendicular to the layers of resin-preimpregnated fibres and towards the breather layer (5) for a predefined period of time.

2. A method according to claim 1, wherein the breather layer (5) is made by a process comprising knitting or weaving.

3. A method according to claim 1, wherein the breather layer (5) is made by a process comprising extrusion.

4. A method according to claim 3, further comprising providing at least part of the structure of the breather layer (5) by use of at least one roller.

5. A method according to any of the preceding claims, wherein the thickness of the strand or string (9) is at least 0.1 mm.

6. A method according to any of the preceding claims, wherein the breather layer (5) has a thickness before use which is 2-10 times the thickness of the strand or string (9).

7. A method according to any of the preceding claims, comprising the use of two or more breather layers (5).

8. A method according to claim 7, wherein the two or more breather layers (5) are placed on top of each other.

9. A method according to claim 7, wherein at least one of the breather layers (5) is placed under the layers of resin-preimpregnated fibres (1).

10. A method according to any of the preceding claims, wherein an additional breather layer (5) made from non-woven fibres is placed on top of or underneath the breather layer(s).

11. A method according to any of the preceding claims, wherein the temperature to which the layers of resin-preimpregnated fibres (1) are heated is at least 80°C.

12. A method according to any of the preceding claims, further comprising the step of applying pressure to the layers of resin-preimpregnated fibres (1) during at least a part of the period of time in which they are heated.

## Patentansprüche

1. Verfahren zur Herstellung einer Windturbinenschaufel, ausgebildet aus einem laminierten Verbundbauteil, aus Schichten aus mit Harz vorimprägnierten Fasern (1), wobei das Verfahren folgende Schritte umfasst:
- Platzieren einer Zahl von Schichten aus mit Harz vorimprägnierten Fasern (1) auf einer Formteiloberfläche (2)
- Platzieren von mindestens einer aus einem polymeren Material ausgebildeten Saugvliesschicht (5) über mindestens einem Teil der Schichten aus mit Harz vorimprägnierten Fasern (1), wobei die Saugvliesschicht eine mindestens eine Litze oder einen Strang (9) umfassende Struktur, in einem sich wiederholenden Muster angeordnet, umfasst, um ein Netzwerk aus verbundenen Kanälen (11) bereitzustellen, wobei sich die Kanäle in mindestens zwei nicht parallelen Richtungen in der Saugvliesschicht (5) erstrecken und eine Querschnittsfläche aufweisen, welche mindestens einer Dicke der Litze oder des Strangs entspricht, sodass mindestens eine Litze oder ein Strang wesentlich weniger Platz in der Saugvliesschicht einnimmt als die Kanäle,
- Bereitstellen einer luftdichten und flexiblen Umhüllung (8) über den Schichten aus mit Harz vorimprägnierten Fasern und der Saugvliesschicht,
- wesentliches Entfernen von in der Umhüllung (8) vorliegender Luft, und
- Erhitzen der Schichten aus mit Harz vorimprägnierten Fasern (1), um eine Abnahme der Viskosität des vorimprägnierenden Harzes zu bewirken, um einen Fluss von Harz in eine Richtung im Wesentlichen senkrecht zu den Schichten aus mit Harz vorimprägnierten Fasern und zu der Saugvliesschicht (5) für eine vordefinierte Zeitspanne zu bewirken.

2. Verfahren nach Anspruch 1, wobei die Saugvliesschicht (5) durch einen Prozess, der Stricken und Weben umfasst, hergestellt wird.

3. Verfahren nach Anspruch 1, wobei die Saugvliesschicht (5) durch einen Prozess, der Extrusion umfasst, hergestellt wird.

4. Verfahren nach Anspruch 3, weiterhin umfassend das Bereitstellen von mindestens einem Teil der Struktur der Saugvliesschicht (5) durch die Nutzung mindestens einer Walze.

5. Verfahren nach einem der vorhergehenden Ansprüche, wobei die Dicke der Litze oder des Strangs (9) mindestens 0,1 mm beträgt.

6. Verfahren nach einem der vorhergehenden Ansprüche, wobei die Saugvliesschicht (5) vor Gebrauch eine Dicke von dem 2-10-fachen der Dicke der Litze oder des Strangs (9) aufweist.

7. Verfahren nach einem der vorhergehenden Ansprüche, den Gebrauch von zwei oder mehr Saugvliesschichten (5) umfassend.

8. Verfahren nach Anspruch 7, wobei die zwei oder mehr Saugvliesschichten (5) aufeinander platziert werden.

9. Verfahren nach Anspruch 7, wobei mindestens eine der Saugvliesschichten (5) unter den Schichten aus mit Harz vorimprägnierten Fasern (1) platziert wird.

10. Verfahren nach einem der vorhergehenden Ansprüche, wobei eine aus Vliesfasern hergestellte zusätzliche Saugvliesschicht (5) auf oder unter der/den Saugvliesschicht(en) platziert wird.

11. Verfahren nach einem der vorhergehenden Ansprüche, wobei die Temperatur, bis zu der die Schichten aus mit Harz vorimprägnierten Fasern (1) erhitzt werden, mindestens 80 °C beträgt.

12. Verfahren nach einem der vorhergehenden Ansprüche, weiterhin umfassend den Schritt der Anwendung von Druck auf die Schichten aus mit Harz vorimprägnierten Fasern (1) während mindestens einem Teil der Zeitspanne, in der sie erhitzt werden.

## Revendications

1. Procédé de fabrication d'une aube de turbine d'éolienne formée d'une partie composite stratifiée, à partir de couches de fibres pré-imprégnées de résine (1), ledit procédé comprenant les étapes consistant à :
- placer un certain nombre de couches de fibres pré-imprégnées de résine (1) sur une surface de moulage (2),
- placer au moins une couche de respiration (5) formée d'un matériau polymère appliqué sur au moins une partie des couches de fibres pré-imprégnées de résine (1), ladite couche de respiration ayant une structure comprenant au moins un toron ou un cordon (9) aménagé en motif répété pour fournir un réseau de canaux interconnectés (11), lesdits canaux s'étendant dans au moins deux directions non parallèles à l'intérieur de la couche de respiration (5) et ayant une surface en coupe transversale qui correspond au moins à l'épaisseur du toron ou du cordon de sorte que le au moins un toron ou un cordon occupe sensiblement moins d'espace dans la couche de respiration que les canaux,
- aménager une enceinte étanche à l'air et flexible (8) par-dessus les couches de fibres pré-imprégnées de résine et la couche de respiration,
- évacuer sensiblement l'air présent dans l'enceinte (8), et
- chauffer les couches de fibres pré-imprégnées de résine (1) pour provoquer une réduction de la viscosité de la résine de pré-imprégnation afin de susciter un écoulement de résine dans une direction sensiblement perpendiculaire aux couches de fibres pré-imprégnées de résine et vers la couche de respiration (5) pendant une période de temps prédéfinie.

2. Procédé selon la revendication 1, dans lequel la couche de respiration (5) est formée par un procédé comprenant un tricotage ou un tissage.

3. Procédé selon la revendication 1, dans lequel la couche de respiration (5) est formée par un procédé comprenant une extrusion.

4. Procédé selon la revendication 3, comprenant en outre la réalisation d'au moins une partie de la structure de la couche de respiration (5) par l'utilisation d'au moins un rouleau.

5. Procédé selon l'une quelconque des revendications précédentes, dans lequel l'épaisseur du toron ou du cordon (9) est d'au moins 0,1 mm.

6. Procédé selon l'une quelconque des revendications précédentes, dans lequel la couche de respiration (5) a une épaisseur avant utilisation qui est de 2 à 10 fois l'épaisseur du toron ou du cordon (9).

7. Procédé selon l'une quelconque des revendications précédentes, comprenant l'utilisation de deux couches de respiration (5) ou plus.

8. Procédé selon la revendication 7, dans lequel les deux couches de respiration (5) ou plus sont placées l'une au-dessus de l'autre.

9. Procédé selon la revendication 7, dans lequel au moins l'une des couches de respiration (5) est placée en dessous des couches de fibres pré-imprégnées de résine (1).

10. Procédé selon l'une quelconque des revendications précédentes, dans lequel une couche de respiration supplémentaire (5) constituée de fibres non tissées est placée par-dessus ou par-dessous la ou les couches de respiration.

11. Procédé selon l'une quelconque des revendications précédentes, dans lequel la température à laquelle les couches de fibres pré-imprégnées de résine (1) sont chauffées est d'au moins 80°C.

12. Procédé selon l'une quelconque des revendications précédentes, comprenant en outre l'étape visant à appliquer une pression aux couches de fibres pré-imprégnées de résine (1) au cours d'au moins une partie de la période de temps pendant laquelle elles sont chauffées.
